# EUROPEAN PATENT SPECIFICATION

(11) **EP 2 372 186 B1**
(45) Date of publication and mention of the grant of the patent: **01.04.2015**
(21) Application number: 10791553.0
(22) Date of filing: 23.06.2010
(51) Int. Cl.: F16G 5/20, F16H 55/36

(54) **COMPOSITE V-BELT TRANSMISSION SYSTEM COMBINING THE FRICTION TRANSMISSION WITH THE MESH TRANSMISSION**
ZUSAMMENGESETZTES KEILRIEMENGETRIEBESYSTEM MIT KOMBINATION AUS REIBUNGSGETRIEBE UND KLAUENGETRIEBE
SYSTÈME DE TRANSMISSION À COURROIE TRAPÉZOÏDALE COMPOSITE ASSOCIANT LA TRANSMISSION PAR FRICTION À LA TRANSMISSION PAR ENGRENAGE

(30) Priority: 23.06.2009 CN 200910303564; 23.06.2009 CN 200910303563
(43) Date of publication of application: 05.10.2011
(73) Proprietor: Zhejiang Kingland Transmission Industry Co., Ltd., Xiaoshan Hangzhou Zhejiang 311255 (CN)
(72) Inventor: WANG, Jinfang, Hangzhou Zhejiang 311255 (CN)
(74) Representative: 2s | ip Schramm Schneider Patentanwälte Rechtsanwälte
(86) International application number: PCT/CN2010/074345
(87) International publication number: WO 2010/149047

(56) References cited:
- GB-A- 365 294
- JP-A- 2004 270 708
- JP-U- 51 151 845
- NL-C- 22 211
- US-A- 2 937 538
- US-A- 3 151 491
- US-A- 3 835 720
- US-A- 4 515 577
- US-A- 4 960 476
- US-B1- 6 485 384

## Description

### TECHNICAL FIELD OF THE INVENTION

The present invention relates to a transmission system, specifically it is a V-belt transmission system for high power, heavy load and large transmission ratio in the belt transmission to eliminate the occurrence of the slippage and idle rotation between the belt and the belt pulley.

### BACKGROUND ART OF THE INVENTION

There are a lot of transmission ways in the mechanism field including gear transmission, chain transmission, belt transmission and so on, of which the gear mesh transmission is the one with accurate transmission ratio, and also it can achieve a large transmission ratio and it can bear heavy power load. However, it is only adapted for the circumstance of which the distance between the two transmission shafts is short. When the distance between the two transmission shafts is long, people usually choose the chain transmission or the belt transmission. Of which the chain transmission is mainly transmitted through the mesh between the chain and sprocket wheel, however the chain transmission inherently exists the defects that it instantly impacts the load which causes the chain transmission has low transmission ratio. It is only adapted for the circumstance of low speed transmission and the requirement for no impact on the load. The mesh and contact between the chain and the chain ring is the engagement between two rigid components, while the mesh between the belt and the belt pulley is the engagement between one rigid component and one flexible (soft) component, the two engagements are essentially different. When two rigid components are in meshing, the meshing character of the two ones must be in an entire match, the slightest error can cause the clearance mesh and the interference mesh. However, when one rigid component and one flexible component are in the meshing, due to the flexibility of flexible components, the interference mesh between the rigid component and the flexible component can also satisfy the mesh requirement, that is, the rigid component compresses the flexible component into the required mesh size and realizes the mesh. The current belt transmission is mainly the friction transmission (triangle belt or V-belt) and the mesh transmission (synchronous belt). The friction transmission is usually adapted to the circumstance of high power, heavy load and the requirements for overload protection, and the friction transmission is generally used on the rubber and plastic or the elastic materials, the elastic slippage and the elastic distortion are unavoidable during the transmission process. Therefore, the slippage and the idle rotation are also unavoidable during the transmission process. However, the synchronous belt transmission is designed based on the theory of mesh transmission and it has accurate transmission ratio, and also, due to the mesh relationship between the belt and the belt pulley, the slippage and the idle rotation will not occur during the transmission process. However, it is only adapted for the transmission of light loads. In order to maintain the normal mesh status for the synchronous belt, the belt body is usually designed relatively thin, thus it can secure flexure performance of the belt body, and also it can secure that the belt teeth will not distort, but it can not bear heavy loads for such belt body structure. If heavy loads are carried, the case that the belt teeth will be scraped off by the belt pulley teeth or the belt body will be ruptured will occur on the synchronous belt. Moreover, if in the high transmission ratio circumstance, the larger pulley of the synchronous belt we manufacture, we will have more difficulty in making it, and the manufacturing process is more complex, the cost is higher, and thus it is not economic.

China patent publication CN1183338 discloses a "V-belt system", the system has the teeth meshed with the synchronous belt pulley on the V-belt surface. The large belt pulley is a V-shaped groove pulley and the small belt pulley is a synchronous belt pulley only used for the mesh transmission. When the system starts, the V-shaped belt has slight slippage in the V-shaped groove pulley and it can reduce the impact on the system in the initial startup. Due to the synchronous mesh relationship between the V-belt and the small belt pulley, the slippage problem between them is overcome, but it is proved by many experiments that it is only limited to the belt transmission system with low power and light load. When it is used in case of the high power or heavy load, the "eating teeth" phenomenon will occur on the transmission belt. That is, the pulley teeth (hard teeth) on the small belt pulley used for the mesh transmission will be eaten off by the belt teeth (soft teeth). And thus the mesh transmission is invalid. It does not settle the problems of slippage and idle rotation in case of high power, heavy load and large transmission ratio, and it has no practical significance. This is the real reason why the invention can not be implemented until now. Especially the design of this patent in the belt is against the basic premise of the belt design, that is, the carrier body of the belt bearing the torque should be the cord or other strong layer of the belt instead of the rubber layer of the belt, therefore, the design principle for the eating teeth problem is wrong in this patent and also it can not solve the "eating teeth" question at all, the "eating teeth" case is very serious and the belt life is very short, it can not be used on the normal production at all.

China patent publication CN201187558Y discloses an oil pumping machine jointed tooth-shaped V-belt transmission device. It prevents the occurrence of the slippage by the design that the trapezoidal lug bosses is specially designed on the belt corresponding to the trapezoid grooves on the belt pulley. Due to no design for eliminating interference, when in the practical application, because the occurrence of the elastic slippage and the elastic distortion on the belt, the trapezoidal lug bosses on the belt and the trapezoid grooves on the belt pulley can not achieve the complete correspondence and mesh, and the interference between the trapezoidal lug bosses on the belt and the trapezoid grooves on the belt pulley occurs. The "trapezoid grooves" on the rigid (hard) belt pulley eat off the "trapezoidal lug bosses" on the flexible (soft) belt, that is, the "eating tooth" phenomenon happens. And the "eating tooth" phenomenon will always go on in the case of the "eating tooth" phenomenon happening, and the "trapezoid grooves" on the rigid belt pulley will always eat the "trapezoidal lug bosses" on the belt until the "trapezoidal lug bosses" on the belt are eaten off. Moreover such a collapse effect will happen in the eating tooth phenomenon that the teeth of the belt will be eaten off in a very short time. And the eaten off of the "trapezoidal lug bosses" on the belt indicates that the purpose of preventing the slippage using the correspondence between the "trapezoidal lug bosses" on the belt and the "trapezoid grooves" on the belt pulley in this patent can not be achieved.

US 2,937,538 A relates to a positive power drive comprising a plurality for circular gears having wholly dedendum teeth on their peripheries provided with flat or plane working faces which mesh with a wholly addendum teeth on a belt provided with involute working faces. NL 22 211 C and JP 51-151845 U4 relate to a pulley with a toothed belt. GB 365 294 A relates to a V-belt transmission system with the features of the pre-characterizing portion of claim 1.

### DISCLOSURE OF THE INVENTION

Object of the present invention is to provide a V-belt transmission system with improved heat dissipation property.

This object is solved by the a composite V-belt transmission system with the features of claim 1. Further advantageous embodiments are defined in the dependent claims.

The present invention is an innovative composite V-belt transmission system based on the shortcomings of various transmission ways in the transmission field. And the present invention provides a composite V-belt transmission system which can effectively avoid the occurrence of slippage, improve the transmission efficiency, reduce the distortion of the belts, and prolong the service life of the belts, thus addressing the problem of the slippage and idle rotation of the existing belt transmissions.

According to the invention, the a V-belt transmission system includes a small pulley served as a driving pulley and a large pulley served as a driven pulley, and the small pulley drives the rotation of the large pulley through the V-belt, and the large pulley is the working pulley. A belt groove is designed on said large pulley in order to match the V-belt. The friction transmission is formed by the match between the two side surfaces of the belt groove and the two side surfaces of the V-belt. A belt groove is designed on said small pulley in order to match the V-belt. And also the friction transmission is formed by the match between the two side surfaces of the belt groove and the two side surfaces of the V-belt. Convex and concave teeth are continuously distributed on the bottom surface of the belt groove of said small pulley. The concave teeth on the bottom surface of the belt groove of said small pulley includes the mesh segment located on the lowermost end. Belt teeth rolling into segment and belt teeth rolling off segment are symmetrically designed on both sides of the mesh segment. Said belt teeth rolling into segment and belt teeth rolling off segment connects to the convex teeth on both sides of the concave teeth of the small pulley. Convex and concave teeth are continuously distributed on the inner bottom surface of said V-belt. The convex teeth on the inner bottom surface of said V-belt are in mesh transmission with the mesh segment on bottom surface of the belt groove of said small pulley. The shape and size of the concave teeth on the inner bottom surface of the V-belt and the convex teeth on the inner bottom surface of the V-belt are identical. The convex teeth on the small pulley are contractible designs corresponding to the concave teeth in order to leave clearances between the bottoms of the concave teeth on said V-belt, and thus ensuring the heat dissipating of the belt on the pulley and reducing the flexure restraints on the belt.

In the present invention, the large pulley which serves as the driven one is in the sliding friction transmission, while the small pulley which serves as the driving one is in the composite transmission combining the sliding friction transmission, with the mesh transmission, and the rolling friction transmission in the case of overload. In the belt transmission mode, the linear speeds of the large pulley and the small pulley are equal, due to their diameters are different, so the angular speeds of the large pulley and the small pulley are different, the wrap angles of them are also different, the wrap angle of the large pulley is more than 180° and the wrap angle of the small pulley is less than 180°. Due to the wide wrap angle and the large diameter of the large pulley, the contacting length between the V-belt and the large pulley is much longer than the contacting length between the V-belt and the small pulley, the contacting area between the V-belt and the large pulley is much larger than the contacting area between the V-belt and the small pulley, thereby the occurrence of the slippage is concentrated on the small pulley, and the idle rotation is shown on the large pulley. The large pulley served as a driven pulley is the working pulley, and the idle rotation on the large pulley indicates the power falling down and the work wasting. In order to improve efficiency, the problem of the occurrence of the idle rotation on the large pulley must be solved, furthermore, in order to settle the question of the occurrence of the idle rotation on the large pulley, the problem of the slippage on the small pulley must be solved. In order to settle the question of the slippage on the small pulley, the mesh segment is designed on the bottom of the belt groove on the small pulley. It overcomes the occurrence of the slippage phenomenon by the mesh transmission between the mesh segment and the convex teeth on the V-belt. While the mesh transmission only works during the mesh segment between the V-belt and the small pulley, and only in the mesh segment, the convex and concave teeth on the small pulley are designed based on the mesh theory. In the transmission area except the mesh area on the small pulley, due to the influences of the tension and the flexure, the belt body and the belt teeth in the present invention are lengthened and largened. The shape of the largened teeth is distorted to the same shape and the same size as the teeth shape of the small pulley under the compression of the teeth of the rigid small belt when the largened teeth enters into the mesh area, and this ensures normal work of the mesh. Because only one segment on the bottom of the small pulley is designed based on the mesh theory, and the belt teeth rolling into segment and the belt teeth rolling off segment are designed on both sides of the mesh segment, such design reduces the possibility of the teeth on the small pulley locking the teeth on the V-belt, and prevents the occurrence of the eating teeth phenomenon, reduces the V-belt wear and improves the service life of the V-belt. The designs of the teeth on the small pulley are completely different from the mesh transmission of the synchronous belt, and the composite transmission system designed in the present invention is mainly applied on the devices with high power, heavy load and large transmission ratio. The mesh theory using the synchronous belt can not realize this aim at all. Meanwhile, the mesh segment can be adjusted. Due to the existing of the rigid teeth on the small pulley, the lengthening of the transmission belt caused by the elastic distortion of the V-belt may be repaired in the mesh segment. In the normal operation, the convex teeth of the V-belt are in the mesh transmission with the mesh segment on the small pulley, of which this movement is not a whole mesh between the belt teeth and the pulley teeth, the mesh depth of them is designed shorter than the radius of the belt teeth, however, when the loads are mutated or overloaded, it is allowable that the belt teeth facilitate the exit of the mesh and then entering into the transmission of rolling friction when the belt teeth rolling into segment and belt teeth rolling off segment which is inner the concave teeth of the small pulley, moreover, this transmission of the rolling friction is carried out under the restraint of the curved line designed between the mesh segment of the small pulley and the convex teeth of the V-belt. Thereby, this design not only ensures the accuracy of the meshing transmission, but also achieves the protection of the belt in case of overload or mutation load. This is where the most prominent innovation of the invention. During the operation of the present invention, the transmission between the two side surfaces of the belt and the two side surfaces of the pulley is in sliding friction, and in the mesh segment the V-belt convex teeth are in mesh transmission with the belt pulley, when the transmission loads are mutated or overloaded, the V-belt is again in the transmission of rolling friction with the small pulley, the belt teeth can even again carry out the mesh transmission and enter into the mesh segment through the belt teeth rolling into segment by climbing over the convex teeth of the belt teeth in the most limited extent. The composite transmission system with the sliding friction, the mesh movement and the rolling friction ingeniously solves the problem of the slippage of the small pulley, meanwhile, it is also ingeniously solves the problem that the mesh transmission can not be protected in case of overloaded. As the belt teeth is in the rolling operation with the pulley teeth, the traditional sliding friction is changed into a rolling friction, which greatly reduces the friction coefficient, greatly improve the service life of the belt, and reduces the consume of the friction energy, thus the belt has the effect of saving energy. The design that the convex teeth on the belt pulley is less than the concave teeth on the V-belt leaves the clearance between the convex teeth on the belt pulley and the bottom of the concave teeth on the V-belt, thereby it improves the heat dissipation performance and improves the flexure restraints of the belt in the run time and further improve the service life of the belt. The convex teeth of the V-belt is designed based on the theory of mutually meshing with the mesh segment on the bottom of the belt groove of the belt pulley, the shape of the concave teeth of the V-belt is the same as that of the convex teeth, thereby, it is convenient for the molding and manufacturing the V-belt.

Further according to the invention, the shape of said belt teeth rolling into segment is the same as that of said belt teeth rolling off segment, and the shape of the belt teeth rolling into segment and the belt teeth rolling off segment is one of the followings: arc, parabolic, involuted, elliptic and cycloid. The radius of curvature of the belt teeth rolling into segment and the belt teeth rolling off segment is more than the one of the mesh segment, and the radius of curvature of the convex teeth on said small pulley is less than the one of the mesh segment. The shape of the belt teeth rolling into segment and the belt teeth rolling off segment just guarantees the V-belt is in a rolling friction way during this segment, and the radius of curvature of the convex teeth on the small pulley, the mesh segment, the belt teeth rolling into segment and the belt teeth rolling off segment is in turn increased. The mesh segment is designed based on the mesh theory, and the radius of curvature of the convex teeth on the small pulley is smaller than that of the mesh segment, thereby, the clearance between the convex teeth on the small belt pulley and the concave teeth on the V-belt is left and thus it improves the heat dissipation, and also, it can reduce the flexure restraints of the belt. The radius of curvature of the belt teeth rolling into segment and the belt teeth rolling off segment is largest, which can ensure the V-belt convex teeth with elastic distortion can enter into the concave teeth of the small pulley without tearing up the belt teeth when the small belt pulley contacts the V-belt, and thus the mesh transmission generates.

As preferred, the belt teeth rolling into segment and the belt teeth rolling off segment on two sides of said mesh segment are symmetrically distributed, and the transmission between the convex teeth on said V-belt are in rolling friction transmission with the belt teeth rolling into segment and the belt teeth rolling off segment. The radius of curvature of the V-belt convex teeth is different from the one of the belt teeth rolling into segment and the belt teeth rolling off segment, thereby ensuring the point contact between them two, and the transmission between them is by rolling friction, the friction of rolling is the smallest and it caused the minimum wear on the belt and the small belt pulley.

As preferred, said mesh segment are arc transitionally connected to said belt teeth rolling into segment and said belt teeth rolling off segment, and the convex teeth on said small belt pulley are arc transitionally connected to said belt teeth rolling into segment and said belt teeth rolling off segment. Every segment adopts arc transition, and it has good connection stability and improves the transmission efficiency.

As preferred, the belt grooves of said small belt pulley are divided into 1-100 parallel sub-belt grooves along the axis direction of the belt pulley, the inner bottom side of said V-belt is divided into the same number of sub-V-belt as the sub-belt grooves along the axis direction, the groove side surface of the sub-belt grooves is in sliding friction with the side surface of the sub-V-belt, the groove bottom side of the sub-belt grooves is in composite transmission combining the sliding friction and the mesh transmission with the inner bottom side of the sub-V-belt. It improves the transmission efficiency and delivery of torque through simultaneous transmission performed by multiple groups.

As preferred, the belt layer structure of said V-belt includes a cord layer, and the upper of the cord layer is composed of buffering rubber layer, curtain cloth layer, buffering rubber layer, wide angle cloth layer, buffering rubber layer and wide angle cloth layer which are in turn adhesive together. The lower of said cord layer is composed of buffering rubber layer, fiber rubber layer, buffering rubber layer, curtain cloth layer, buffering rubber layer, fiber rubber layer and buffering rubber layer which are in turn adhesive together. The surface of convex-concave teeth on the V-belt is provided with an elastic cloth layer. This design can increase the rigidity of belt, and prevent the tearing of the transmission belt.

As preferred, a clearance h is left between the top part of the convex teeth on said small pulley and the bottom part of the concave teeth of said V-belt, the radius of the concave teeth on the V-belt is R, and 0.2mm ≤h <R, the size of the clearance is improved with the size of the belt pulley, mainly to ensure enough clearance for heat dissipation, and it improves the performance of heat dissipation.

As preferred, the diameter ratio of said large belt pulley and said small belt pulley is 1: 1.5 ∼1: 50, and the shaft center distance between said large belt pulley and said small belt pulley is more than the sum of the radius of said large belt pulley and said small belt pulley, the wrap angle of said large belt pulley is a parameter α, the wrap angle of said small belt pulley is a parameter β, of which α:β=1.1∼3. The distance between the two belt pulleys is larger and it needs greater transferred of torque and load, thereby the adoption of synchronous belt transmission can not achieve this aim.

Therefore, the V-belt transmission system of the present invention has the following advantages: the wrap angle of the large pulley is larger, the diameter ratio of the large belt pulley and the small belt pulley is larger, the slippage effect on the large pulley is not great, therefore, the V-belt sliding friction transmission is adopted on the large belt pulley which improves traction force; however, the small pulley serves as a driving wheel, and the wrap angle of it is less than 180°, the convex-concave teeth are designed on the small belt pulley, in order to mesh the convex-concave teeth, the same convex-concave teeth are designed on the V-belt, of which the bottom of the convex teeth on the small pulley is the mesh segment, and the convex-concave teeth on the V shaped segment are designed based on the mesh relationship with the mesh segment. It can prevent the occurrence of the slippage through the mesh transmission. Meanwhile, the two sides of the mesh segment are designed with belt teeth rolling into segment and belt teeth rolling off segment and it can prevent the eating teeth phenomenon, and the use of rolling friction makes the convex teeth of the V-belt easily rolling into the mesh segment and realizes the mesh transmission. The composite transmission combining the sliding friction transmission on the surface sides of the V-belt, the rolling friction transmission on the teeth belt teeth rolling into segment and belt teeth rolling off segment and the mesh transmission on the mesh segment is used on the small pulley and it ensures the none occurrence of the eating teeth and improves the service life of the V-belt besides increases the torque and power transmission.

### BRIEF DESCRIPTION OF THE DRAWING

- FIG. 1: is the tridimensional view of the V-belt transmission system from one angle in the present invention.
- FIG. 2: is the tridimensional view of the V-belt transmission system from another angle in the present invention.
- FIG. 3: is the enlarged front view of the V-belt winding around the small belt pulley in the present invention.
- FIG.4: is the enlarged front view of D of Fig.3 in the present invention.
- FIG.5: is the enlarged front view of D on the small pulley of Fig.3 in the present invention.
- FIG.6: is the sectional view of V-belt of Fig.1 in the present invention.
- FIG.7: is the sectional view of the small pulley of Fig.3 in the present invention.

### DETAILED DESCRIPTION OF THE PREFERRED EMBODIMENT

The followings are the further descriptions for the present invention combining to the drawings through the embodiment.

### EMBODIMENT:

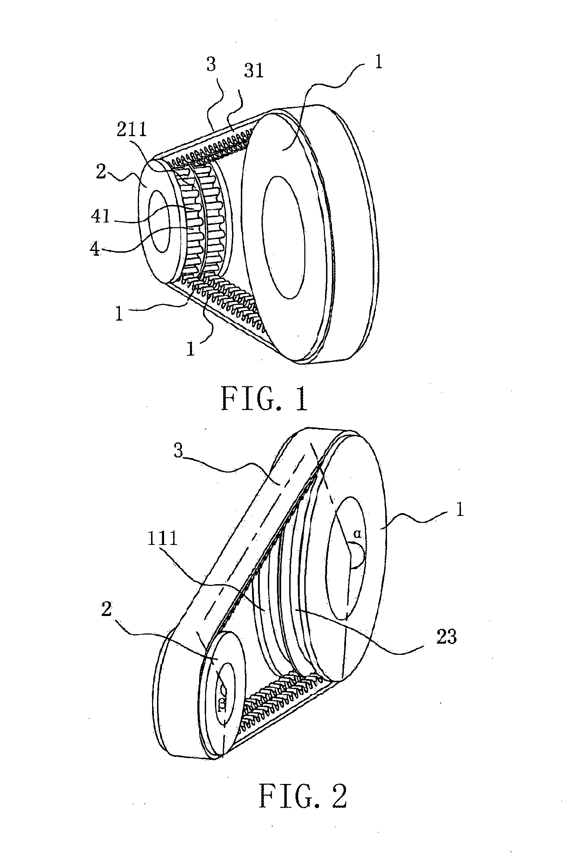

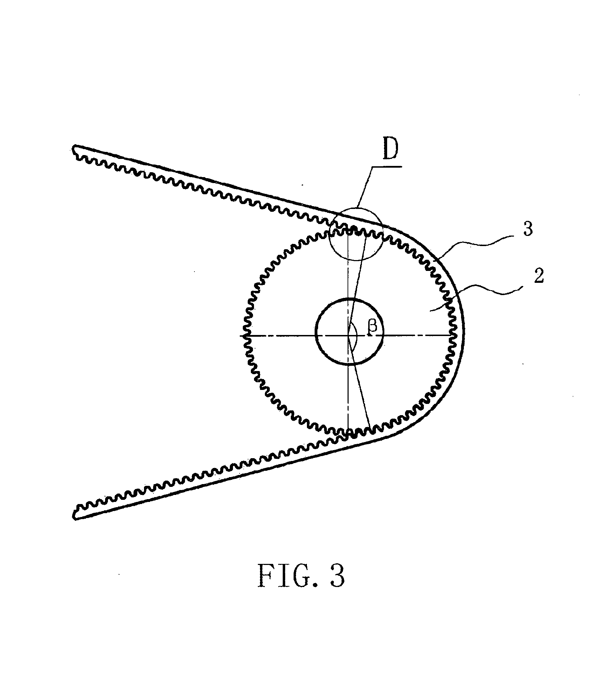

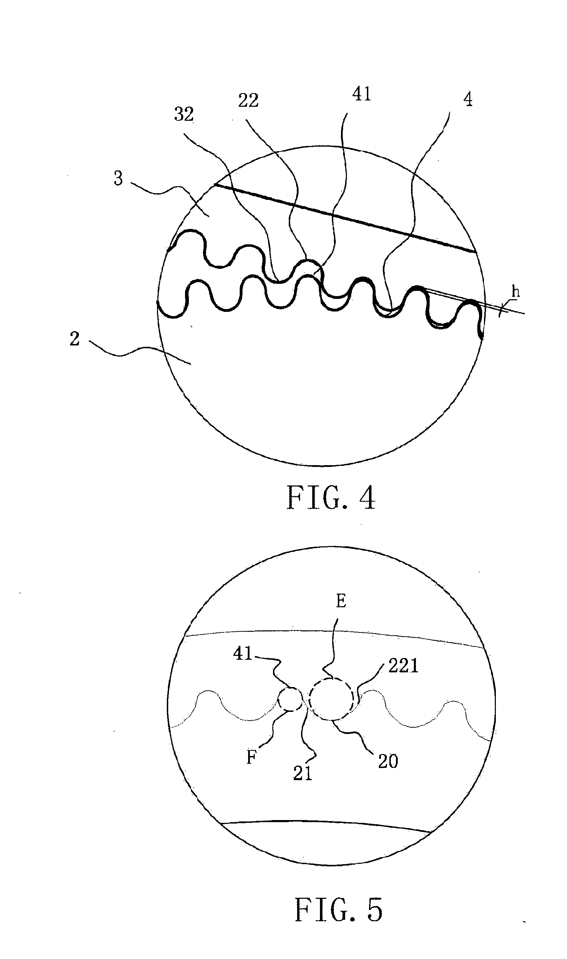

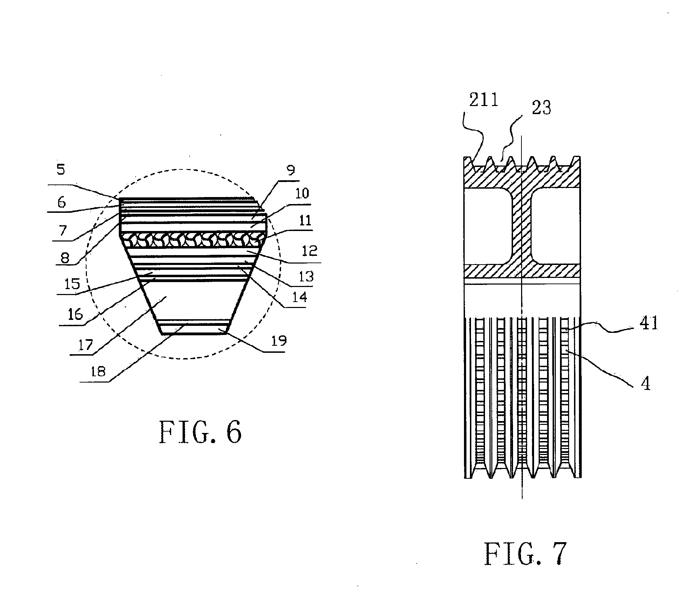

As shown in FIG.1, FIG.2 and FIG.3, a V-belt transmission system includes a large belt pulley 1 with the diameter of 990 mm and a small belt pulley 2 with the diameter of 280 mm, the rotation shaft center distance between the large belt pulley 1 and the small belt pulley 2 is 1807.57 mm, the wrap angle α of the large belt pulley 1 is 202.65°, and the wrap angle β of the small belt pulley 2 is 157.35°. The small belt pulley 2 serves as a driving pulley and the large belt pulley 1 serves as a driven pulley, and a V-belt 3 is winded around the small belt pulley 2 and the large belt pulley 1, the small belt pulley 2 works by driving the large belt pulley 1 rotating through the V-belt 3. A belt groove 23 is designed on the large belt pulley 1, and the two side surfaces 31 of the V-belt 3 contact the two side surfaces 111 of the belt groove 112 of the large pulley, and the V-belt 3 drives the large pulley 1 rotating by the sliding friction. A belt groove 23 is also designed on the outer circle surface side of the small belt pulley 2, and the two side surfaces 211 of the belt groove 23 on the small pulley contact with the two side surfaces 31 of the V-belt 3, and the transmission between them two is by sliding friction. In order to prevent the occurrence of the slippage, the convex-concave teeth are designed on the bottom of the belt groove on the small pulley 2, and also, the convex-concave teeth are designed on the inner bottom surface of the V-belt 3. As shown in Fig.4, the convex teeth 4 on the small pulley includes the mesh segment 20 located on the lowermost end. Belt teeth rolling into segment 221 and belt teeth rolling off segment 21 are connected on both sides of the mesh segment 20 by the transitional arc, and the shape and size of the belt teeth rolling into segment 221 and belt teeth rolling off segment 21 are the same, the belt teeth rolling into segment 221 and belt teeth rolling off segment 21 connect to the convex teeth 41 on the bottom surface of the belt groove of the small pulley 2, of which, the height ratio of the mesh segment 20 on the small pulley 2 and the belt teeth rolling into segment 221 and belt teeth rolling off segment 21 is 1:2.5, the convex teeth 32 on the inner bottom surface of the V-belt 3 is in mesh transmission with the mesh segment 20 on the bottom surface of the concave teeth on the small pulley 2, the shape of the concave teeth 22 on the inner bottom surface of the V-belt 3 and the convex teeth 32 on the inner bottom surface of the V-belt 3 is the same, a clearance h is left between the top part of the convex teeth 41 on the small pulley 2 and the bottom part of the concave teeth 22 of the V-belt, the distance of the clearance h is 0.72 mm, the height of the mesh segment 20 on the small pulley is 1.4 mm, and the radius of the convex tooth on the V-belt is R, of which R is 2.95 mm. As shown in Fig. 5, the dotted line circle E is the virtual circle of the mesh segment, and the dotted line circle F is the virtual circle of the convex teeth 41 on the small pulley, the belt teeth rolling into segment 221 and the belt teeth rolling off segment 21 is an involute line, the belt teeth rolling into segment 221 and the belt teeth rolling off segment 21 are symmetrically designed on both sides of the mesh segment 20. The curvature radius of the convex 41 on the small pulley is 1.69 mm, and the curvature radius of the mesh segment 20 on the small pulley is 2.95 mm, the curvature radius of the belt teeth rolling into segment 221 and belt teeth rolling off segment 21 is greater than that of the mesh segment 20, the curvature radius of the convex teeth 41 on the small pulley is less than that of the mesh segment 20. Because the curvature radius of the belt teeth rolling into segment 221 and the belt teeth rolling off segment 21 is different from that of the mesh segment, that is, the curvature radius of the belt teeth rolling into segment 221 and the belt teeth rolling off segment 21 is also different from that of the convex teeth 32 on the V-belt 3, the rolling friction is then generated between the belt teeth rolling into segment 221 and belt teeth rolling off segment 21 and the convex teeth 32 on the V-belt 3. As shown in Fig. 6, the belt layer structure of the V-belt 3 includes a cord layer 11, and the upper of the cord layer 11 is composed of buffering rubber layer 10, curtain cloth layer 9, buffering rubber layer 8, wide angle cloth layer 7, buffering rubber layer 6 and wide angle cloth layer 5 which are in turn adhesive together. The lower of the cord layer 11 is composed of buffering rubber layer 12, fiber rubber layer 13, buffering rubber layer 14, curtain cloth layer 15, buffering rubber layer 16, fiber rubber layer 17 and buffering rubber layer 18 which are in turn adhesive together. The surface of convex-concave teeth of the transmission belt 1 is provided with an elastic cloth layer 19. In order to drive heavier loads, the large pulley, the small pulley and the V bet can be jointed together in series. The belt grooves of the large pulley and the small pulley in the present invention are all jointed together in series by two V-belt grooves 23, two rows of belt bodies are also designed on the V-belt corresponding to the groove bodies. Of course this can be seen from Fig. 7, the row groups are jointed together by 5 rows in series, five belt grooves 23 are designed on the small pulley and the side surface 31 of the belt grooves 23 is in friction transmission with the V-belt.

The present invention can be applied on the oil pumping unit, in which 1200 NM ∼2000 NM transmission torque is required in the transmission system. Because the small pulley 2 serves as the driving pulley and the large pulley serves as the driven one, the movement of the large pulley 1 only needs the driving force by the V-belt 3 through the sliding friction, the V-belt 3 has greater friction, and also it can provide more tractive force, and it is suitable for heavier loads and torque. Because the wrap angle of the small pulley 2 is thin, when the V-belt 3 is on operating, the elastic distortion and the elastic sliding are easily generated, and thus the phenomenon of the slippage occurs, which shortens the service life of the V-belt 3. In order to prevent the occurrence of the slippage, and reduce the elastic distortion and the elastic sliding on the V-belt 3, the mesh segment 20 is designed on the small pulley 2 and the V-belt 3. In order to make the belt teeth on the V-belt enter and exit more smoothly during the mesh transmission, the belt teeth rolling into segment 221 and belt teeth rolling off segment 21 are designed on both sides of the mesh segment. The composite transmission between the small pulley and the V-belt is achieved, in which the transmission combines the sliding friction transmission between the V-belt 3 and the surface side 111 of the small pulley 2, with the rolling friction transmission between the belt teeth rolling into segment 221 and the belt teeth rolling off segment 21 and the mesh transmission. It prevents the occurrence of the eating teeth, and prolongs the service of the belt in the case of ensuring great transmission torque.

The above description is only the preferred embodiment of the present invention, it is not the restriction in any form of the present invention. Although the invention has been the disclosed by the preferred embodiment, it is not used to limit the present invention. Any person skilled in the art may make numerous probable changes or modifications, or modify the equivalent changes for the same embodiment for the technical solution in the present invention based on the disclosed method and technical contents without extending the scope of technical solution in the present invention. Therefore, any content without extending the scope of technical solution in the present invention, and any simple modification, the same changes and modifications for the above embodiments based on the substantial contents in the technical solution are still within the claimed scope of technical solution of this invention.

## Claims

1. A composite V-belt transmission system combining friction transmission with mesh transmission, including a small pulley (2) and a large pulley (1) and a V-belt (3), the small pulley (2) driving the rotation of the large pulley (1) through the V-belt (3), wherein a belt groove (23) is designed on said small pulley (2) in order to match the V-belt (3), and friction transmission is formed by the match between the two side surfaces (211) of the belt groove (23) on the small pulley (2) and the two side surfaces of the V-belt (3),
convex (32) and concave (22) teeth are continuously distributed on the inner bottom surface of said V-belt (3),
the small pulley (2) serves as a driving pulley, and the large pulley (1) serves as a driven pulley,
a belt groove (23) is designed on said large pulley (1) in order to match the V-belt (3), friction transmission being formed by the match between the two side surfaces of the belt groove on the large pulley (I) and the two side surfaces of the V-belt (3),
convex and concave teeth are continuously distributed on the bottom surface of the belt groove (23) of said small pulley (2),
the concave teeth on the bottom surface of the belt groove (23) of said small pulley (2) includes the mesh segment (20) located on the lowermost end,
belt teeth rolling into segment (221) and belt teeth rolling off segment (21) are designed on both sides of the mesh segment (20),
said belt teeth rolling into segment (221) and belt teeth rolling off segment (21) separately connects to the convex teeth on the bottom of the belt groove on the small pulley,
the convex teeth (32) on the inner bottom surface of said V-belt (3) are in mesh transmission with the mesh segment (20) on bottom surface of the belt groove (23) of said small pulley (2),
the shape and size of the concave teeth (22) on the inner bottom surface of the V-belt (3) and the convex teeth (32) on the inner bottom surface of the V-belt (3) are identical,
a clearance is left between the top end of the convex teeth (41) on the small pulley and the bottom of the concave teeth (32) on said V-belt (3),
**characterized** in that:
the shape of said belt teeth rolling into segment (221) is the same as that of said belt teeth rolling off segment (21), and the shape of the belt teeth rolling into segment (221) and the belt teeth rolling off segment (21) is one of the following: arc, parabolic, involuted, elliptic and cycloid, and
the radius of curvature of the belt teeth rolling into segment (221) and the belt teeth rolling off segment (21) is more than the one of the mesh segment (20), and the radius of curvature of the convex teeth (41) on said small pulley is less than the one of the mesh segment.

2. A composite V-belt transmission system combining the fiction transmission with the mesh transmission as defined in claim 1, further **characterized in that**; the belt teeth rolling into segment (221) and the belt teeth rolling off segment (21) on two sides of said mesh segment (20) are symmetrically distributed, and the convex teeth (32) on said V-belt are in rolling friction transmission with the belt teeth rolling into segment (221) and the belt teeth rolling off segment (21).

3. A composite V-belt transmission system combining the fiction transmission with the mesh transmission as defined in claim 1, further **characterized in that**: said mesh segment (20) are arc transitionally connected to said belt teeth rolling into segment (221) and said belt teeth rolling off segment (21), and the convex teeth (41) on said small belt pulley are arc transitionally connected to said belt teeth rolling into segment (221) and said belt teeth rolling off segment (21).

4. A composite V-belt transmission system combining the fiction transmission with the mesh transmission as defined in claim 1, further **characterized in that**: the belt grooves (23) of said small belt pulley are divided into 1-100 parallel sub-belt grooves along the axis direction of the belt pulley, the inner bottom side of said V-belt is divided into the same number of sub-V-belt as the sub-belt grooves along the axis direction, the groove side surface of the sub-belt grooves is in sliding friction with the side surface of the sub-V-belt, the groove bottom side of the sub-belt grooves is in composite transmission combining the sliding friction and the mesh transmission with the inner bottom side of the sub-V-belt,

5. A composite V-belt transmission system combining the fiction transmission with the mesh transmission as defined in claim 1, further **characterized in that**: the belt layer structure of said V-belt (3) includes a cord layer (11), and the upper of the cord layer (11) is composed of buffering rubber layer (10), curtain cloth layer (9), buffering rubber layer (6), wide angle cloth layer (7), buffering rubber layer (6), and wide angle cloth layer (5) which are in turn adhesive together, the lower of said cord layer (11) is composed of buffering rubber layer (12), fiber rubber layer (13), buffering rubber layer (14), curtain cloth layer (15), buffering robber layer (16), fiber rubber layer (17), and buffering rubber layer (18), which are in turn adhesive together, and the surface of convex-concave teeth on said V-belt is provided with arl elastic cloth layer (19).

6. A composite V-belt transmission system combining the fiction transmission with the mesh transmission as defined in claim 1, further **characterized in that**: a clearance h is left between the top part of the convex teeth (41) on said small pulley and the bottom part of the concave teeth (22) of said V-belt (3), the radius of the concave teeth on the V-belt is R, and 0.2mm ≤ h <R.

7. A composite V-belt transmission system combining the fiction transmission with the mesh transmission as defined in claim 1, further **characterized in that**: the diameter ratio of said large belt pulley (1) and said small belt pulley (2) is 1: 1.5 ∼1: 50, and the shaft center distance between said large belt pulley (1) and said small belt pulley (2) is more than the sum of the radius of said large belt (1) pulley and said small belt pulley (2), the wrap angle of said large belt pulley (1) is a parameter α, the wrap angle of said small belt pulley (2) is a parameter β, of which α:β=1.1∼3.

## Patentansprüche

1. Verbundkeilriementransmissionssystem, kombinierend Reibungstransmission mit Klauentransmission, umfassend eine kleine Scheibe (2) und eine große Scheibe (1) und einen Keilriemen (3), wobei die kleine Scheibe (2) die Rotation der großen Scheibe (1) durch den Keilriemen (3) antreibt, wobei eine Riemennut (23) auf der kleinen Scheibe (2) ausgebildet ist, um mit dem Keilriemen (3) übereinzustimmen, und Reibungstransmission durch die Übereinstimmung zwischen den Zweiseiten-Oberflächen (211) der Riemennut (23) auf der kleinen Scheibe (2) und den Zweiseiten-Oberflächen des Keilriemens (3) gebildet ist, konvexe (32) und konkave (22) Zähne fortlaufend auf der inneren unteren Oberfläche des Keilriemens (3) verteilt sind,
wobei die kleine Scheibe (2) als eine Antriebsscheibe dient und die große Scheibe (1) als eine angetriebene Scheibe dient,
eine Riemennut (23) auf der großen Scheibe (1) angeordnet ist, um mit dem Keilriemen (3) übereinzustimmen, wobei Reibungstransmission durch die Übereinstimmung zwischen den Zweiseiten-Oberflächen der Riemennut auf der großen Scheibe (1) und den Zweiseiten-Oberflächen des Keilriemens (3) gebildet ist,
konvexe und konkave Zähne fortlaufend auf der unteren Oberfläche der Riemennut (23) der kleinen Scheibe (2) verteilt sind,
die konkaven Zähne auf der unteren Oberfläche des Riemennut (23) der kleinen Scheibe (2) den Klauensegment (20), angeordnet an dem untersten Ende, umfassen,
Riemenzähne-Hineinroll-Segment (221) und Riemenzähne-Herausroll-Segment (21) auf beiden Seiten des Klauensegments (20) ausgebildet sind,
das Riemenzähne-Hineinroll-Segment (221) und das Riemenzähne-Herausroll-Segment (21) separat mit den konvexen Zähnen auf der Unterseite der Riemennut auf der kleinen Scheiben verbindet,
die konvexen Zähne (32) auf der inneren Bodenfläche des Keilriemens (3) im Klauentransmission mit dem Klauensegment (20) auf der unteren Oberfläche der Riemennut (23) der kleinen Scheibe (2) sind,
die Form und Größe der konkaven Zähne (22) auf der inneren unteren Oberfläche des Keilriemens (3) und der konvexen Zähne (32) auf der inneren Bodenfläche des Keilriemens (3) identisch sind,
ein Zwischenraum zwischen dem oberen Ende der konvexen Zähne (41) auf der kleinen Scheibe und dem Boden der konkaven Zähne (32) auf dem Keilriemen (3) besteht,
**dadurch gekennzeichnet, dass**
die Form des Riemenzähne-Hineinroll-Segments (221) die gleiche wie diejenige des Riemenzähne-Herausroll-Segments (21) ist und die Form des Riemenzähne-Hineinroll-Segments (221) und des Riemenzähne-Herausroll-Segments (21) eine der folgenden ist: bogenförmig, parabolisch, involutenförmig, elliptisch und zykloid, und
der Krümmungsradius des Riemenzähne-Hineinroll-Segments (221) und des Riemenzähne-Herausroll-Segments (21) größer ist als derjenige des Klauensegments (20), und der Krümmungsradius der konvexen Zähne (41) auf der kleinen Scheibe kleiner ist als derjenige des Klauensegments.

2. Verbundkeilriementransmissionssystem, kombinierend Reibungstransmission mit Klauentransmission, nach Anspruch 1, weiter **dadurch gekennzeichnet, dass** das Riemenzähne-Hineinroll-Segment (221) und das Riemenzähne-Herausroll-Segment (21) auf beiden Seiten des Klauensegments (20) symmetrisch verteilt sind und die konvexen Zähne (32) auf dem Keilriemen in Rollreibungstransmission mit dem Riemenzähne-Hineinroll-Segment (221) und dem Riemenzähne-Herausroll-Segment (21) sind.

3. Verbundkeilriementransmissionssystem, kombinierend Reibungstransmission mit Klauentransmission, nach Anspruch 1, weiter **dadurch gekennzeichnet, dass** das Klauensegment (20) übergangsweise mit dem Riemenzähne-Hineinroll-Segments (221) und dem Riemenzähne-Herausroll-Segment (21) verbunden ist, und die konvexen Zähne (41) auf der kleinen Riemenscheibe Bogenübergangsweise mit dem Riemenzähne-Hineinroll-Segment (221) und dem Riemenzähne-Herausroll-Segment (21) verbunden sind.

4. Verbundkeilriementransmissionssystem, kombinierend Reibungstransmission mit Klauentransmission, nach Anspruch 1, weiter **dadurch gekennzeichnet, dass** die Riemennuten (23) der kleinen Riemenscheibe in 1-100 parallelen Sub-Riemen-Nuten entlang der Achsenrichtung der Riemenscheibe unterteilt sind, wobei die innere Bodenseite des Keilriemens in die gleiche Anzahl von Sub-Keilriemen wie die Sub-Riemen-Nuten entlang der Achsenrichtung unterteilt sind, die Nutenseiten-Oberfläche der Sub-Riemen-Nuten in Gleitreibung mit der Seitenoberfläche des Sub-Keilriemens ist, die Nutenbodenseite der Sub-Riemen-Nuten Komposit-Transmission, kombinierend die Gleitreibung und die Klauentransmission mit der inneren Bodenseite des Sub-Keilriemens, ist.

5. Verbundkeilriementransmissionssystem, kombinierend Reibungstransmission mit Klauentransmission, nach Anspruch 1, weiter **dadurch gekennzeichnet, dass** die Riemenlagenstruktur des Keilriemens (3) eine Cordlage (11), und das Obere der Cordlage (11) gebildet ist aus Puffergummilage (10), Deckgewebelage (9), Puffergummilage (8), Weitwinkel-Stofflage (7), Puffergummilage (6) und Weitwinkel-Stofflage (5), die ihrerseits adhäsiv zusammen sind, das Untere der Cordlage (11) gebildet ist aus Puffergummilage (12), Gummifaserlage (13), Puffergummilage (14), Deckgewebelage (15), Puffergummilage (16), Gummifaserlage (17) und Puffergummilage (18), die ihrerseits adhäsiv zusammen sind, und die Oberfläche der konvex-konkaven Zähne auf dem Keilriemen mit einer elastischen Gewebeschicht (19) versehen ist.

6. Verbundkeilriementransmissionssystem, kombinierend Reibungstransmission mit Klauentransmission, nach Anspruch 1, weiter **dadurch gekennzeichnet, dass** ein Zwischenraum h zwischen dem oberen Teil der konvexen Zähne (41) auf der kleinen Scheibe und dem unteren Teil der konkaven Zähne (22) des Keilriemens )3) vorhanden ist, wobei der Radius der konkaven Zähne auf dem Keilriemen R ist, und 0,2 mm ≤ h <R.

7. Verbundkeilriementransmissionssystem, kombinierend Reibungstransmission mit Klauentransmission, nach Anspruch 1, weiter **dadurch gekennzeichnet, dass** das Durchmesserverhältnis der großen Riemenscheibe (1) und der kleinen Riemenscheibe (2) 1: 1,5 ∼ 1: 50 ist, und der Achsmittelpunktabstand zwischen der großen Riemenscheibe (1) und der kleinen Riemenscheibe (2) größer ist als die Summe des Radius der großen Riemenscheibe (1) und der kleinen Riemenscheibe (2), wobei der Umschlingungswinkel der großen Riemenscheibe (1) ein Parameter α ist, der Umschlingungswinkel der kleinen Riemenscheibe (2) ein Parameter β ist, wobei α: β = 1,1 ∼ 3 ist.

## Revendications

1. Un système de transmission à courroie trapézoïdale composite associant la transmission par friction à la transmission par engrenage, comprenant une petite poulie (2) et une grande poulie (1) et une courroie trapézoïdale (3), la petite poulie (2) entraînant la rotation de la grande poulie (1) par la courroie trapézoïdale (3), une rainure de courroie (23) étant réalisée dans ladite petite poulie (2) afin de correspondre à la courroie trapézoïdale (3), et la transmission à friction étant réalisée par la correspondance entre les surfaces à deux faces (211) de la rainure de courroie (23) dans la petite poulie (2) et les surfaces à deux faces de la courroie trapézoïdale (3),
des dents convexes (32) et concaves (22) étant distribuées en continu sur la surface inférieure intérieure de ladite courroie trapézoïdale (3),
la petite poulie (2) servant de poulie d'entraînement, et la grande poulie (1) servant de poulie commandée,
une rainure de courroie (23) étant réalisée dans ladite grande poulie (1) afin de correspondre à la courroie trapézoïdale (3), la transmission à friction étant réalisée par la correspondance entre les surfaces à deux faces de la rainure de courroie dans la grande poulie (1) et les surfaces à deux faces de la courroie trapézoïdale (3),
des dents convexes et concaves sont distribuées en continu sur la surface inférieure intérieure de la rainure de courroie (23) de ladite petite poulie (2),
les dents concaves sur la surface inférieure de la rainure de courroie (23) de ladite petite poulie (2) comportant le segment d'engrenage (20) situé sur l'extrémité la plus basse,
un segment (221) de dents de courroie entrant et un segment (21) de dents de courroie sortant du segment (21) étant réalisées sur les deux côtés du segment d'engrenage (20),
ledit le segment (221) de dents de courroie entrant et ledit segment (21) de dents de courroie sortant étant connectés séparément aux dents convexes sur le fond de la rainure de courroie sur la petite poulie,
les dents convexes (32) sur la surface inférieure intérieure de ladite courroie trapézoïdale (3) engrenant le segment d'engrenage (20) sur la surface inférieure de la rainure de courroie (23) de ladite petite poulie (2),
la forme et la taille des dents concaves (22) sur la surface inférieure interne de la courroie trapézoïdale (3) et les dents convexes (32) sur la surface inférieure interne de la courroie trapézoïdale (3) étant identiques,
un jeu étant présent entre l'extrémité supérieure des dents convexes (41) sur la petite poulie et le fond des dents concaves (32) sur ladite courroie trapézoïdale (3),
**caractérisé en ce que**:
la forme du segment (221) de dents de courroie entrant est le même que celle du segment (21) de dents de courroie sortant, et la forme du segment (221) de dents de courroie entrant et du segment (21) de dents de courroie sortant est une des formes suivantes: arc, parabolique, involution, elliptique et cycloïde, et
le rayon de courbure du segment (221) de dents de courroie entrant et du segment (21) de dents de courroie sortant est plus grand que celui du segment d'engrenage (20), et le rayon de courbure des dents convexes (41) de ladite petite poulie est inférieur à celui du segment d'engrenage.

2. Le système de transmission à courroie trapézoïdale composite associant la transmission par friction à la transmission par engrenage selon la revendication 1, **caractérisé en ce que** en outre: le segment (221) de dents de courroie entrant et le segment (21) de dents de courroie sortant sur deux côtés dudit segment d'engrenage (20) sont symétriquement distribués, et les dents convexes (32) sur ladite courroie trapézoïdale sont en transmission à friction roulante avec le segment (221) de dents de courroie entrant et le segment (21) de dents de courroie sortant.

3. Le système de transmission à courroie trapézoïdale composite associant la transmission par friction à la transmission par engrenage selon la revendication 1, **caractérisé en ce que** en outre: lesdits segments d'engrenage (20) sont connectés en transmission en manière d'arc audit segment (221) de dents de courroie entrant et audit segment (21) de courroie de dents sortant, et les dents convexes (41) sur ladite petite poulie de courroie sont connectés au segment (221) de dents de courroie entrant et au segment (21) de dents de courroie sortant.

4. Le système de transmission à courroie trapézoïdale composite associant la transmission par friction à la transmission par engrenage selon la revendication 1, **caractérisé en ce que** en outre: les rainures de courroie (23) de ladite petite poulie de courroie sont divisés en 1-100 rainures parallèles sous-courroie le long de la direction de l'axe de la poulie de courroie, la partie inférieure intérieure de ladite courroie trapézoïdale est divisée en le même nombre de sous-courroies trapézoïdales que les rainures sous-courroie le long de la direction de l'axe, la surface côté rainure des rainures sous-courroie est en friction de glissement avec la surface latérale de la sous-courroie trapézoïdale, le côté de fond de la rainure des rainures sous-courroie est en transmission composite associant la friction de glissement et la transmission par engrenage à la face inférieure interne de la sous-courroie trapézoïdale.

5. Le système de transmission à courroie trapézoïdale composite associant la transmission par friction à la transmission par engrenage selon la revendication 1, **caractérisé en ce que** en outre: la structure de couche de courroie de ladite courroie trapézoïdale (3) comprend une couche de cordon (11), et la partie supérieure à la couche de cordon (11) est composée d'une couche de caoutchouc d'amortissement (10), couche de tissu de rideau (9), couche de caoutchouc d'amortissement (8), couche de tissu d'angle large (7), couche de caoutchouc d'amortissement (6) et couche de tissu d'angle large (5) qui sont à leur tour collées ensemble, et la partie inférieure à ladite couche de corde (11) est composée d'une couche de caoutchouc d'amortissement (12), couche de fibres de caoutchouc (13), couche de caoutchouc d'amortissement (14), couche de tissu de rideau (15), couche de caoutchouc d'amortissement (16), couche de fibres de caoutchouc (17) et couche de caoutchouc d'amortissement (18), qui sont à leur tour collées ensemble, et la surface des dents convexes-concaves sur ladite courroie trapézoïdale est munie d'une couche de tissu élastique (19).

6. Le système de transmission à courroie trapézoïdale composite associant la transmission par friction à la transmission par engrenage selon la revendication 1, **caractérisé en ce que** en outre: un jeu h est présent entre la partie supérieure des dents convexes (41) de ladite petite poulie et la partie inférieure de les dents concaves (22) de ladite courroie trapézoïdale (3), le rayon des dents concaves sur la courroie trapézoïdale étant R, et 0,2 mm ≤ h <r.

7. Le système de transmission à courroie trapézoïdale composite associant la transmission par friction à la transmission par engrenage selon la revendication 1, **caractérisé en ce que** en outre: le rapport des diamètres de ladite grande poulie de courroie (1) et ladite petite poulie de courroie (2) est 1: 1,5 ∼ 1: 50, et la distance du centre d'arbre entre ladite grand poulie de courroie (1) et ladite petite poulie de courroie (2) est supérieure à la somme du rayon de ladite grand poulie de courroie (1) et de ladite petite poulie de courroie (2), l'angle d'enroulement de ladite grande poulie de courroie (1) étant un paramètre α, l'angle de ladite petite poulie (2) de courroie étant un paramètre β, et α : β = 1,1 ∼ 3.
